# EUROPÄISCHE PATENTSCHRIFT

(11) **EP 1 273 470 B1**
(45) Veröffentlichungstag und Bekanntmachung des Hinweises auf die Patenterteilung: **15.11.2006**
(21) Anmeldenummer: 02012879.9
(22) Anmeldetag: 11.06.2002
(51) Int. Cl.: B60J 7/043

(54) **Lüfterdach für Fahrzeuge**
Ventilating roof for vehicles
Toit à ventilation pour véhicules

(30) Priorität: 04.07.2001 DE 10131884
(43) Veröffentlichungstag der Anmeldung: 08.01.2003
(73) Patentinhaber: Webasto Vehicle Systems International GmbH, 82131 Stockdorf (DE)
(72) Erfinder: de Gaillard, Francois, 85390 Mouilleron en pareds (FR); Kölbl, Michael, 82061 Neuried (DE)
(74) Vertreter: Wiese, Gerhard

(56) Entgegenhaltungen:
- DE-A- 19 739 388
- DE-C- 4 217 151
- DE-C- 10 001 964
- DE-C- 19 716 390
- US-A- 5 702 779
- US-A- 5 845 959

## Beschreibung

Die vorliegende Erfindung betrifft ein Lüfterdach für Fahrzeuge, mit einem im Fahrzeugdach ausgebildeten Dachausschnitt und einem diesem zugeordneten, zwischen einer den Dachausschnitt verschließenden Schließstellung und einer oder mehreren Öffnungsstellungen verstellbaren transparenten Deckel gemäß dem Oberbegriff des Patentanspruchs 1.

Ein solches Lüfterdach ist zum Beispiel aus der DE-C-197 16 390 bekannt. Bei dieser ist ein Deckel einstückig aus einem Kunststoffmaterial hergestellt. Auf einem vorspringenden Randbereich ist eine Dichtung aufgesteckt, deren unterer Schenkel sich auf die Unterseite des Randbereichs des Deckels erstreckt.

Transparente Deckel für Kraftfahrzeug-Lüfterdächer sind allgemeiner Stand der Technik. Sie bestehen im allgemeinen aus einem speziellen Glasmaterial, welches die erforderliche Festigkeit und Steifigkeit aufweist. Bekannt sind Systeme, die als konventionelle Schiebe-Hebedächer mit zweiseitig durchtauchenden Dekkeln ausgebildet sind. Ein Nachteil derartiger transparenter Glasdeckel wird darin gesehen, daß sie verhältnismäßig schwer sind, was zur Folge hat, daß die Führungs- und Verstellsysteme für diese Deckel äußerst robust, beispielsweise unter Verwendung von Aluminium-Führungsschienen ausgeführt sein müssen, damit sie die insbesondere auf unebenen Fahrbahnen auftretenden erheblichen Beschleunigungen und Fahrbetriebsstöße aufnehmen können.

Ein Einsatz von Deckeln aus einem transparenten Kunststoffmaterial stößt insoweit auf Schwierigkeiten, als dieses Material eine geringe Eigensteifigkeit besitzt, so daß zusätzliche Maßnahmen zur Versteifung getroffen werden müssen. Außerdem ist die Wärmedehnung derartiger Deckel aus transparentem Kunststoff erheblich, so daß eine sich bei Temperaturschwankungen verändernde Breite der Fuge zwischen dem Dachausschnitt und dem Deckel durch aufwendige, umgreifende Dichtungssysteme ausgeglichen werden muß.

Es ist die Aufgabe der vorliegenden Erfindung, ein Lüfterdach der im Oberbegriff des Anspruches 1 genannten Art zu schaffen, welches bei einem geringen konstruktiven und herstellungstechnischen Aufwand den Einsatz eines leichten Dekkels aus transparentem Kunststoff ermöglicht, bei welchem auch die Kompensierung einer Wärmedehnung unkritisch ist.

Diese Aufgabe ist erfindungsgemäß durch die Merkmale des Anspruchs 1 gelöst.

Ein den Rand des Dachausschnittes allseitig untergreifender Deckel aus Metall ist grundsätzlich durch die DE 38 07 961 C2 bekannt. Dabei besteht der Deckel im wesentlichen aus einem Deckelaußenblech, welches entweder zum Zwecke einer Stabilisierung und Versteifung an der Unterseite mit einer aufgeschäumten Kunststoffschicht versehen ist oder in einer anderen Ausgestaltung doppelschalig mit einem an dem Deckelaußenblech befestigen Deckelinnenblech ausgeführt ist. Derartige Deckel sind konstruktiv und herstellungstechnisch sehr aufwendig, da sie außer den Blechbearbeitungsvorgängen des Stanzens und des Tiefziehens sowie der Nachbearbeitung der Blechkanten noch einen Schritt des Kunststoffschäumens oder des Verschweißens erfordern. Ein weiterer Nachteil wird auch darin gesehen, daß Deckel aus Metall schwer sind und dementsprechend aufwendige und stabile Führungs- und Betätigungssysteme brauchen.

Die erfindungsgemäße Kombination, die sich aus dem Einsatz von Kunststoffmaterial für den Deckel sowie aus der Verwendung eines den Dachausschnitt allseitig untergreifenden Deckelsystems ergibt, ermöglicht es, eine konstruktiv und herstellungstechnisch einfache Lösung für den Deckel zu schaffen, die auch eine Ausbildung als transparenter Deckel erlaubt. Sie führt außerdem zu einer Lösung, die keine Kompensierung einer Wärmedehnung mehr erfordert, da eine Abdichtung nicht am Umfang des Deckels erfolgen muß, sondern in dem überlappenden Bereich zwischen dem Deckel und dem Rand des Dachausschnittes vorgesehen werden kann.

Da sich der Deckel in seiner Schließstellung mittels seines Umfangrandes direkt allseitig an dem Rand des Dachausschnittes abstützt, werden in dieser Schließstellung keine Kräfte vom Deckel auf das Führungs- und Verstellsystem übertragen. Das gilt insbesondere für die erheblichen Saugkräfte, die bei schneller Fahrt auf den Deckel wirken. Durch die allseitige Abstützung wird der Deckel selbst stabilisiert, so daß er verhältnismäßig leicht ausgebildet werden kann. Das wiederum hat zur Folge, daß auch in einer Öffnungsstellung des Deckels die auf diesen wirkenden Stoß- und Beschleunigungskräfte gering sind, so daß auch insoweit der Führungs- und Verstellmechanismus verhältnismäßig leicht ausgeführt werden kann.

Dennoch ist in der Schließstellung des Deckels eine äußerst präzise Positionierung und eine sichere, durch den Sog noch verstärkte Abdichtung gegeben, womit durch den Fahrtwind erzeugte Geräusche weitgehend vermieden werden können.

Der Zweck der an der Deckelunterseite aufgebrachten Randauflage aus einem nicht transparenten Kunststoff besteht im wesentlichen darin, die im Bereich des Dachausschnittrandes und des Umfangsrandbereiches des Deckels vorgesehenen Elemente zur Führung und Betätigung des Deckels optisch abzudecken, so daß der zentrale, transparente Deckelbereich ohne störende Elemente ist. Die Randauflage läßt sich in einem Arbeitsgang und in einer Formvorrichtung zusammen mit dem eigentlichen Deckel herstellen, so daß der Herstellungsaufwand gering gehalten werden kann.

In zweckmäßigen Ausgestaltungen der Erfindung ist vorgesehen, daß die Randauflage aus einem Kunststoffmaterial mit einer in diesem eingebetteten Armierung hergestellt ist. Dadurch kann die Festigkeit und Steifigkeit des Deckels gegenüber einer Ausführung aus nur einem Kunststoffmaterial bei gleichen Abmessungen verbessert werden.

Als Kunststoffmaterial für den Deckel wird vorzugsweise ein transparentes Polycarbonat verwendet; das Kunststoffmaterial der Randauflage ist beispielsweise ein eingefärbtes Polycarbonat. Es versteht sich von selbst, daß auch andere geeignete Kunststoffmaterialien eingesetzt werden können.

Damit der Deckel in seiner Schließstellung eine mit der Dachfläche bündige Fläche bildet, ist in weiterer Ausgestaltung der Erfindung vorgesehen, daß der Umfangsrandbereich des Deckels eine nach unten abgekröpfte Form mit einem aus der Deckelebene nach unten abgebogenen, im wesentlichen vertikalen Schenkel und einem daran nach außen anschließenden im wesentlichen horizontalen Schenkel hat, wobei der nicht abgekröpfte zentrale Bereich des Deckels in Form und Größe im wesentlichen dem Dachausschnitt entspricht und der horizontale Schenkel unter den Rand des Dachausschnittes greift. Es versteht sich, daß der Randbereich des Deckels so weit abgekröpft ist, daß auch unter Berücksichtigung einer zwischen dem Deckel und dem Rand des Dachausschnittes vorgesehenen Dichtung der Deckel im wesentlichen bündig mit der Dachfläche ist (flush design). Die Begriffe "vertikal" und "horizontal" beziehen sich auf eine normale horizontale Lage des Deckels.

Je nach der konstruktiven Ausgestaltung des gesamten Lüfterdaches einschließlich der Führungs- und Betätigungssysteme für den Deckel kann es ausreichend sein, daß die Randauflage wenigstens den abgekröpften Umfangsrandbereich des Deckels, d.h. den nach unten abgebogenen vertikalen Schenkel und den daran anschließenden horizontalen Schenkel überdeckt. In bevorzugter Ausgestaltung der Erfindung ist jedoch vorgesehen, daß die Randauflage zusätzlich zu dem abgekröpften Umfangsrandbereich des Deckels einen an diesem jeweils zur Deckelmitte hin angrenzenden Randstreifen überdeckt. Diese Ausgestaltung gewährleistet einen ausreichenden Sichtschutz für die Führungs- und Betätigungselemente des verstellbaren Deckels.

Um zu erreichen, daß der Deckel in seinem Umfangsrandbereich nicht eine größere Dicke aufweist als in seinem zentralen Bereich, weisen der abgekröpfte Umfangsrandbereich und der daran innen angrenzende Randstreifen jeweils eine gegenüber dem übrigen Bereich des Deckels geringere Dicke auf, wobei die Randauflage eine derartige Dicke hat, daß die Gesamtdicke im Bereich der Randauflage etwa der Dicke des übrigen Bereiches des Deckels entspricht.

Zwischen dem Rand des Dachausschnittes und dem Umfangsrandbereich des Deckels ist in an sich bekannter Weise eine ringsum laufende Dichtung vorgesehen. Diese ist vorzugsweise zwischen dem horizontalen Schenkel des abgekröpften Umfangsrandbereiches und dem Rand der Dachöffnung angeordnet. Auf diese Weise wird die Dichtung durch den Andruck des Deckels gegen den Rand des Dachausschnittes zusammengedrückt, so daß die Dichtwirkung durch die Sogwirkung der das Fahrzeug umströmenden Luft noch verstärkt wird. Die Dichtwirkung ist vor allem auch unabhängig von der bei unterschiedlichen Temperaturen unterschiedlichen radialen Ausdehnung des Deckels, da die Abdichtung nicht am Deckelumfang erfolgt.

Die Dichtung ist vorzugsweise an dem horizontalen Schenkel befestigt, beispielsweise aufgeklebt. Gemäß einer alternativen Ausführungsform kann die Dichtung auch an der Unterseite des Daches nahe dem Rand des Dachausschnitts angeordnet sein.

In einer anderen Ausgestaltung der Erfindung ist vorgesehen, daß die Randauflage nach außen über die Endkante des horizontalen Schenkels übersteht und einen aufgekanteten Steg aufweist, und daß die Dichtung mit einem daran ausgebildeten Steckfuß zwischen der Endkante des horizontalen Schenkels und den Steg eingesteckt ist. Auf diese Weise läßt sich die Dichtung auch ohne Klebung sicher befestigen. Zusätzlich kann jedoch noch eine Klebeverbindung vorgesehen sein.

In einer weiteren Ausgestaltung der Erfindung ist der horizontale Schenkel des abgekröpften Umfangsrandbereiches in seinem äußeren Bereich zu einer Wasserauffangrinne geformt. Diese kann das eventuell über die innerhalb der Wasserauffangrinne angeordnete Dichtung durchdringende Wasser aufnehmen und in an sich bekannter Weise über Wasserabläufe abführen. Eine andere Ausgestaltung der Erfindung sieht vor, daß ein zwischen dem vertikalen Schenkel und der auf dem horizontalen Schenkel des abgekröpften Umfangsrandbereiches angeordneten Dichtung gebildeter Raum als Wasserauffangrinne ausgebildet ist, die wiederum mit Wasserabläufen zum Ableiten des Regenwassers ausgestattet ist.

Der Rand des Dachausschnittes kann in an sich bekannter Weise in der Dachebene auslaufen; in einer anderen Ausgestaltung ist vorgesehen, daß der Rand des Dachausschnittes einen nach unten abgebogenen Steg hat, an dessen vorderer Außenkante sich die Dichtung anlegt. Da sich durch das Abbiegen des Dachausschnittrandes die Tiefe der zwischen dem Deckel und dem Dachausschnitt verbleibenden Rinne vergrößert, ist diese Version besonders geeignet, diese Rinne als Wasserauffangrinne zu verwenden.

Die Erfindung umfaßt auch ein Verfahren zur Herstellung eines Deckels für ein Lüfterdach. Dieses sieht vor, daß die aus einem transparenten Kunststoff gebildete Deckelplatte und die an der Unterseite der Deckelplatte in einem Umfangsrandbereich derselben gebildete Randauflage aus einem nicht transparenten Kunststoff mittels eines 2-K-Spritzverfahrens in einem Arbeitsgang und in einer Form hergestellt werden. Die Randauflage aus einem nicht transparenten Kunststoff eignet sich insbesondere auch als Verstärkung und Versteifung der Deckelplatte; sie kann gemäß einer weiteren Ausgestaltung der Erfindung zu diesem Zweck beispielsweise durch ein Glasfasermaterial, ein Kohlefasermaterial oder dergleichen armiert sein.

Mehrere Ausgestaltungen der Erfindung sind in der Zeichnung dargestellt und im folgenden näher beschrieben. Es zeigen:
- Fig. 1: schematisch in einer perspektivischen Darstellung ein Kraftfahrzeugdach mit einer Dachöffnung und einem diese verschließenden Deckel;
- Fig. 2: in einer vergrößerten Darstellung und teilweise weggebrochen ein Kraftfahrzeugdach mit einer Dachöffnung und einem Deckel;
- Fig. 3: schematisch einen Schnitt entsprechend der Schnittlinie III-III in Fig. 2;
- Fig. 4 bis 9: jeweils schematisch unterschiedliche Ausgestaltungen des Randbereiches eines Deckels.

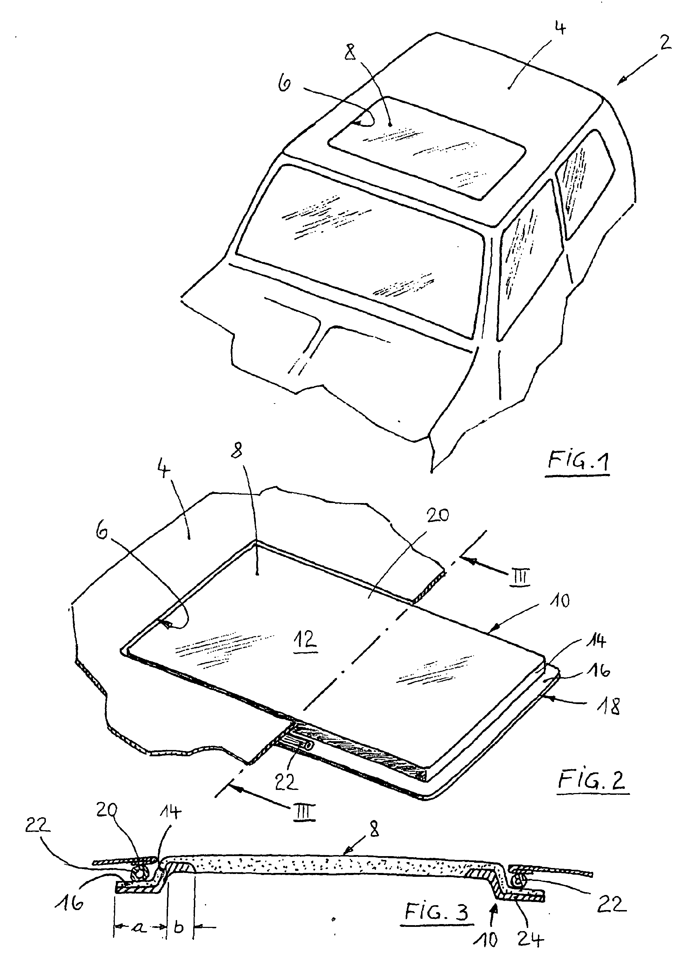

Fig. 1 zeigt in einer perspektivischen Draufsicht ein Kraftfahrzeug 2 mit einem Dach 4, in welchem ein Dachausschnitt 6 ausgebildet ist. Der Dachausschnitt 6 kann durch einen Deckel 8 verschlossen werden. Der Deckel 8 kann beispielsweise aus der in Fig. 1 dargestellten Schließstellung, in der er den Dachausschnitt 6 vollständig und dicht verschließt, in eine oder mehrere Öffnungsstellungen verstellt werden.

Wie insbesondere aus Fig. 2 zu ersehen ist, handelt es sich bei dem Deckel 8 um einen in der in Fig. 2 dargestellten Schließstellung den Dachausschnitt 6 allseitig untergreifenden Deckel. Der Deckel 8 ist in seinem Umfangsrandbereich 10 nach unten abgekröpft, wobei der nicht abgekröpfte zentrale Bereich 12 in Form und Größe im wesentlichen dem Dachausschnitt 6 entspricht.

Wie insbesondere auch aus Fig. 3 ersichtlicht ist, umfaßt der abgekröpfte Umfangsrandbereich einen aus der Deckelebene nach unten abgebogenen, im wesentlichen vertikalen Schenkel 14 und einen daran nach außen anschließenden, im wesentlichen horizontalen Schenkel 16, welcher einen den Deckel 8 umgebenden Randflansch 18 bildet. Dieser durch den horizontalen Schenkel 16 gebildete Randflansch 18 greift in der Schließstellung des Deckels 8 unter den Rand 20 des Dachausschnittes 6. Zwischen dem horizontalen Schenkel 16 des Deckels 8 und dem Rand 20 des Dachausschnittes 6 ist eine umlaufende Dichtung 22 vorgesehen, die bei der Schließstellung des Deckels 8 diesen gegen den Dachausschnitt 6 abdichtet.

Wie insbesondere in Fig. 3 angedeutet ist, besteht der Deckel 8 aus einem transparenten Kunststoff, beispielsweise einem transparenten Polycarbonat. Zumindest im Umfangsrandbereich a ist an der Deckelunterseite eine ringsum laufende Randauflage 24 aus einem nicht transparenten Kunststoff, beispielsweise einem nicht transparenten Polycarbonat aufgebracht. Diese Randauflage 24 hat in erster Linie die Aufgabe, beispielsweise die Dichtung 22 sowie gegebenenfalls in der Zeichnung nicht dargestellte, im Dach angeordnete seitliche Führungsschienen und Bedienungselemente für die Öffnungs- und Schließbewegung des Dekkels 8, die durch den transparenten Deckel hindurch sichtbar wären, abzudecken.

Die Randauflage 24 kann außerdem aus einem gegenüber dem transparenten Kunststoff des Deckels 8 festeren Material hergestellt oder beispielsweise mit Armierungen, wie Glasfasern oder Kohlefasern und dergleichen, verstärkt sein, um die Festigkeit und Steifigkeit des Deckels 8 zu verbessern.

Wie ebenfalls in Fig. 3 erkennbar ist, überdeckt die Randauflage 24 im dargestellten Ausführungsbeispiel außerdem einen an den abgekröpften Umfangsrandbereich a zur Deckelmitte hin angrenzenden Randstreifen b, beispielsweise um mittels der breiteren Randauflage die Festigkeit und Steifigkeit des Deckels 8 noch weiter zu erhöhen.

Fig. 4 zeigt eine Anordnung etwa gemäß der Fig. 3. Sie läßt insbesondere erkennen, daß der gesamte, von der Randauflage 24 überdeckte Randbereich des Deckels 8, d.h. der abgekröpfte Umfangsrandbereich a und der Randstreifen b eine gegenüber dem zentralen Bereich 12 des Deckels 8 geringere Dicke aufweist, und daß die Randauflage 24 eine Dicke hat derart, daß die Gesamtdicke im Bereich der Randauflage 24 etwa derjenigen des zentralen Bereiches 12 entspricht.

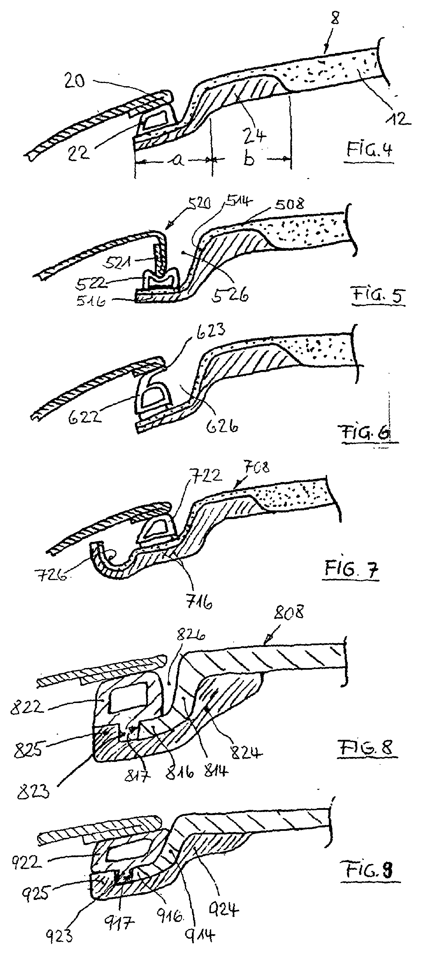

Fig. 5 zeigt einen Deckel 508, dessen Abkröpfung weiter nach unten gezogen ist als bei dem Deckel 8 der Fig. 4. Der Rand 520 des Dachausschnittes ist um etwa 90° nach unten zu einem Steg 521 abgebogen, wobei sich die auf dem horizontalen Schenkel 516 angeordnete Dichtung 522 an die Endkante des Steges 521 anlegt. Durch diese Ausgestaltung ergibt sich zwischen dem vertikalen Schenkel 514 des Deckels 508 und dem Steg 521 des Dachausschnittes eine besonders tiefe Rinne 526, die als Regenauffangrinne dienen kann. Wie im einzelnen nicht dargestellt ist, sind beispielsweise durch die Dichtung 522 hindurchführende Abläufe vorgesehen, über die in der Rinne 526 sich sammelndes Wasser in an sich bekannter Weise abgeleitet wird.

Eine ähnliche Wirkung erreicht man dann, wenn, wie in Fig. 6 dargestellt ist, die Dichtung 622 noch mit einer hochreichenden Dichtlippe 623 versehen ist. Auch auf diese Weise ergibt sich eine verhältnismäßig tiefe Rinne 626, die als Wasserauffangrinne dienen kann.

Fig. 7 zeigt eine Ausgestaltung, bei der der horizontale Schenkel 716 des abgekröpften Umfangsrandbereiches in seinem äußeren Bereich zu einer Wasserauffangrinne 726 geformt ist, die eventuell die innerhalb der Wasserauffangrinne 726 angeordnete Dichtung 722 durchdringendes Wasser auffängt und in an sich bekannter Weise über Abläufe ableitet.

Wie die Fig. 4 bis 7 erkennen lassen, sind die Dichtungen 22, 522, 622 und 722 jeweils mit dem horizontalen Schenkel des abgekröpften Umfangsrandbereiches, beispielsweise durch Kleben, verbunden. Grundsätzlich wäre es auch denkbar, beispielsweise bei der Ausgestaltung gemäß der Fig. 4 die Dichtung 22 fest am Rand 20 des Dachausschnittes anzuordnen.

Fig. 8 zeigt ein Ausführungsbeispiel, bei welchem die Randauflage 824 nach außen über die Endkante 817 des horizontalen Schenkels 816 übersteht und einen aufgekanteten Steg 825 aufweist. Die Dichtung 822 ist mit einem daran ausgebildeten Steckfuß 823 zwischen die Endkante 817 und den Steg 825 eingesteckt. Sie kann zusätzlich dort verklebt sein. Der Raum zwischen der Dichtung 822 und dem vertikalen Schenkel 814 des Umfangsrandbereiches kann wiederum als Wasserauffangrinne 826 dienen.

Fig. 9 zeigt eine Anordnung ähnlich der Fig. 8 mit einer zwischen die Endkante 917 des horizontalen Schenkels 916 und einen Steg 925 der Randauflage 924 mittels eines Steckfußes 923 eingesteckten Dichtung 922. Diese Anordnung unterscheidet sich von der Anordnung der Fig. 8 im wesentlichen dadurch, daß die Dichtung 922 sich eng an den vertikalen Schenkel 914 anlegt, so daß in diesem Bereich keine Wasserauffangrinne verbleibt.

### Bezugszeichenliste

- 2: Kraftfahrzeug
- 4: Dach
- 6: Dachausschnitt
- 8: Deckel
- 10: Umfangsrandbereich
- 12: zentraler Bereich
- 14: vertikaler Schenkel
- 16: horizontaler Schenkel
- 18: Randflansch
- 20: Rand Dachausschnitt
- 22: Dichtung
- 23: Dichtlippe
- 24: Randauflage
- 508: Deckel
- 514: vertikaler Schenkel
- 516: horizontaler Schenkel
- 520: Rand
- 521: Steg
- 522: Dichtung
- 526: Wasserauffangrinne
- 622: Dichtung
- 623: Dichtlippe
- 626: Wasserauffangrinne
- 708: Deckel
- 716: horizontaler Schenkel
- 722: Dichtung
- 726: Wasserauffangrinne
- 808: Deckel
- 814: vertikaler Schenkel
- 816: horizontaler Schenkel
- 817: Endkante
- 822: Dichtung
- 823: Steckfuß
- 824: Randauflage
- 825: Steg
- 826: Wasserauffangrinne
- 914: vertikaler Schenkel
- 916: horizontaler Schenkel
- 917: Endkante
- 922: Dichtung
- 923: Steckfuß
- 924: Randauflage
- 925: Steg
- a: Umfangsrandbereich (abgekröpft)
- b: Randstreifen

## Patentansprüche

1. Lüfterdach für Fahrzeuge, mit einem im Fahrzeugdach ausgebildeten Dachausschnitt und einem diesem zugeordneten, zwischen einer den Dachausschnitt verschließenden Schließstellung und einer oder mehreren Öffnungsstellungen verstellbaren transparenten Deckel, wobei der Deckel (8) als ein in seiner Schließstellung mit seinem Umfangsrand den Rand (20) des Dachausschnittes (6) allseitig untergreifender Deckel aus einem transparenten Kunststoffmaterial ausgebildet ist, **dadurch gekennzeichnet, daß** in einem Umfangsrandbereich (a), der ausschließlich an der Unterseite des Deckels (8) vorgesehen ist, eine ringsum laufende Randauflage (24) aus einem nicht transparenten Kunststoffmaterial aufgebracht ist und daß die Randauflage (24) aus einem Kunststoffmaterial mit einer gegenüber dem transparenten Kunststoffmaterial des Deckels (8) höheren Festigkeit hergestellt ist.

2. Lüfterdach nach Anspruch 1, **dadurch gekennzeichnet, daß** das Kunststoffmaterial der Randauflage (24) mit einer in dieses eingebetteten Armierung versehen ist.

3. Lüfterdach nach Anspruch 1 oder 2, **dadurch gekennzeichnet, daß** das Kunststoffmaterial des Deckels (8) ein transparentes Polycarbonat ist.

4. Lüfterdach nach einem der Ansprüche 1-3, **dadurch gekennzeichnet, daß** das Kunststoffmaterial der Randauflage (24) ein eingefärbtes Polycarbonat ist.

5. Lüfterdach nach einem der Ansprüche 1 bis 4, **dadurch gekennzeichnet, daß** der Umfangsrand des Deckels (8) eine nach unten abgekröpfte Form mit einem aus der Deckelebene nach unten abgebogenen, im wesentlichen vertikalen Schenkel (14) und einem daran nach außen anschließenden, im wesentlichen horizontalen Schenkel (16) hat, wobei der nicht abgekröpfte zentrale Bereich (12) des Deckels (8) in Form und Größe dem Dachausschnitt (6) entspricht und der horizontale Schenkel (16) unter den Rand (20) des Dachausschnittes (6) greift.

6. Lüfterdach nach Anspruch 5, **dadurch gekennzeichnet, daß** die Randauflage (24) wenigstens den abgekröpften Umfangsrandbereich (a) des Deckels (8) überdeckt.

7. Lüfterdach nach Anspruch 5 oder 6, **dadurch gekennzeichnet, daß** die Randauflage (24) den abgekröpften Umfangsrandbereich (a) des Deckels (8) und einen an diesen jeweils zur Deckelmitte hin angrenzenden Randstreifen (b) überdeckt.

8. Lüfterdach nach Anspruch 7, **dadurch gekennzeichnet, daß** der abgekröpfte Umfangsrandbereich (a) und der daran angrenzende Randstreifen (b) jeweils eine gegenüber dem zentralen Bereich (12) des Deckels (8) geringere Dicke aufweisen, und daß die Randauflage (24) eine derartige Dicke hat, daß die Gesamtdicke im Bereich der Randauflage der Dicke des zentralen Bereiches (12) des Deckels (8) im wesentlichen entspricht.

9. Lüfterdach nach einem der Ansprüche 5 bis 8, **dadurch gekennzeichnet, daß** zwischen dem Rand (20) des Dachausschnittes und dem Umfangsrandbereich (a) des Deckels (8) eine ringsum laufende Dichtung (22) vorgesehen ist.

10. Lüfterdach nach Anspruch 9, **dadurch gekennzeichnet, daß** die ringsum laufende Dichtung (22) zwischen dem horizontalen Schenkel (16) des abgekröpften Umfangsrandbereiches (a) und dem Rand (20) des Dachausschnittes angeordnet ist.

11. Lüfterdach nach Anspruch 10, **dadurch gekennzeichnet, daß** die Dichtung (22) an dem horizontalen Schenkel (16) des Umfangsrandbereiches (a) befestigt ist.

12. Lüfterdach nach Anspruch 11, **dadurch gekennzeichnet, daß** die Dichtung (22) auf den horizontalen Schenkel (16) des Umfangsrandbereiches (a) aufgeklebt ist.

13. Lüfterdach nach Anspruch 11, **dadurch gekennzeichnet, daß** die Randauflage (824) nach außen über die Endkante (817) des Umfangsrandbereiches des Deckels (808) übersteht und einen aufgekanteten Steg (825) aufweist, und daß die Dichtung (822) mit einem daran ausgebildeten Steckfuß (823) zwischen der Endkante (817) des Umfangrandes und dem Steg (825) eingesteckt ist.

14. Lüfterdach nach einem der Ansprüche 5 bis 12, **dadurch gekennzeichnet, daß** der horizontale Schenkel (716) des Deckels (708) in seinem äußeren Bereich zu einer Wasserauffangrinne (726) geformt ist.

15. Lüfterdach nach einem der Ansprüche 5 bis 13, **dadurch gekennzeichnet, daß** ein zwischen dem vertikalen Schenkel (514) des abgekröpften Umfangsrandbereiches des Deckels (508) und der auf dem horizontalen Schenkel (516) angeordneten Dichtung (522) vorgesehener Raum als Wasserauffangrinne (526) ausgebildet ist.

16. Lüfterdach nach einem der Ansprüche 9 bis 14, **dadurch gekennzeichnet, daß** der Rand (520) des Dachausschnittes einen nach unten abgebogenen Steg (521) hat, an dessen Endkante sich die Dichtung (522) anlegt.

17. Verfahren zur Herstellung eines Deckels (8) für ein Lüfterdach gemäß einem der Ansprüche 1 bis 16 der aus einem transparenten Kunststoffmaterial gebildet ist und in einem Umfangsrandbereich an der Unterseite des Deckels (8) eine Randauflage (24) aus einem nicht transparenten Kunststoffmaterial aufweist, **dadurch gekennzeichnet, daß** der Deckel (8) mit der Randauflage (24) in einem 2-K-Spritzverfahren in einem Arbeitsgang und in einer Form hergestellt wird.

18. Verfahren nach Anspruch 17, **dadurch gekennzeichnet, daß** dem nicht transparenten Kunststoff der Randauflage (24) ein Armierungsmaterial wie beispielsweise Glasfasermaterial oder Kohlefasermaterial beigemischt wird.

## Claims

1. Ventilating roof for vehicles, having a roof cut-out formed in the vehicle roof and a transparent panel assigned to the latter and displaceable between a closed position closing the roof cut-out and one or more open positions, the panel (8) being formed as a panel made of a transparent plastic material which, in its closed position, engages on all sides with its circumferential edge under the edge (20) of the roof cut-out (6), **characterized in that**, in a circumferential edge region (a) which is provided only on the underside of the panel (8), an edge support (24) made of a non-transparent plastic material and running all around is fitted, and **in that** the edge support (24) is produced from a plastic material with a higher strength than the transparent plastic material of the panel (8).

2. Ventilating roof according to Claim 1, **characterized in that** the plastic material of the edge support (24) is provided with reinforcement embedded therein.

3. Ventilating roof according to Claim 1 or 2, **characterized in that** the plastic material of the panel (8) is a transparent polycarbonate.

4. Ventilating roof according to one of Claims 1-3, **characterized in that** the plastic material of the edge support (24) is a dyed polycarbonate.

5. Ventilating roof according to one of Claims 1 to 4, **characterized in that** the circumferential edge of the panel (8) has a shape angled over downwards with a substantially vertical limb (14) bent over downwards from the plane of the panel and a substantially horizontal limb (16) adjoining the said vertical limb on the outside, the central region (12) of the panel (8), which is not angled over, corresponding in size and shape to the roof cut-out (6), and the horizontal limb (16) engaging under the edge (20) of the roof cut-out (6).

6. Ventilating roof according to Claim 5, **characterized in that** the edge support (24) covers at least the angled-over circumferential edge region (a) of the panel (8).

7. Ventilating roof according to Claim 5 or 6, **characterized in that** the edge support (24) covers the angled-over circumferential edge region (a) of the panel (8) and an edge strip (b) adjoining the said region in each case towards the centre of the panel.

8. Ventilating roof according to Claim 7, **characterized in that** the angled-over circumferential edge region (a) and the edge strip (b) adjacent thereto in each case have a lower thickness than the central region (12) of the panel (8), and **in that** the edge support (24) has a thickness such that the total thickness in the region of the edge support corresponds substantially to the thickness of the central region (12) of the panel (8).

9. Ventilating roof according to one of Claims 5 to 8, **characterized in that** a seal (22) running all around is provided between the edge (20) of the roof cut-out and the circumferential edge region (a) of the panel (8).

10. Ventilating roof according to Claim 9, **characterized in that** the seal (22) running all around is arranged between the horizontal limb (16) of the angled-over circumferential edge region (a) and the edge (20) of the roof cut-out.

11. Ventilating roof according to Claim 10, **characterized in that** the seal (22) is fixed to the horizontal limb (16) of the circumferential edge region (a).

12. Ventilating roof according to Claim 11, **characterized in that** the seal (22) is adhesively bonded to the horizontal limb (16) of the circumferential edge region (a).

13. Ventilating roof according to Claim 11, **characterized in that** the edge support (824) projects outwards beyond the end edge (817) of the circumferential edge region of the panel (808) and has a web (825) which is turned up at the edge, and **in that** the seal (822) is pushed in with a push-in foot (823) formed thereon between the end edge (817) of the circumferential edge and the web (825).

14. Ventilating roof according to one of Claims 5 to 12, **characterized in that** the horizontal limb (716) of the panel (708) is shaped so as to form a water collecting channel (726) in its outer region.

15. Ventilating roof according to one of Claims 5 to 13, **characterized in that** a space provided between the vertical limb (514) of the angled-over circumferential edge region of the panel (508) and the seal (522) arranged on the horizontal limb (516) is formed as a water collecting channel (526).

16. Ventilating roof according to one of Claims 9 to 14, **characterized in that** the edge (520) of the roof cut-out has a web (521) which is bent over downwards and on whose end edge the seal (522) rests.

17. Method for the production of a panel (8) for a ventilating roof according to one of Claims 1 to 16, which is formed from a transparent plastic material and, in a circumferential edge region on the underside of the panel (8), has an edge support (24) made of a non-transparent plastic material, **characterized in that** the panel (8) is produced with the edge support (24) in a 2-component injection moulding process in one operation and in one mould.

18. Method according to Claim 17, **characterized in that** a reinforcing material such as glass fibre material or carbon fibre material is admixed with the non-transparent plastic of the edge support (24).

## Revendications

1. Toit à ventilation pour véhicules, avec une découpure ou découpe de toit formée dans le toit du véhicule et un panneau transparent associé à cette ouverture et pouvant être déplacé entre une position fermée fermant la découpure de toit et une ou plusieurs positions ouvertes, sachant que le panneau (8) est réalisé sous la forme d'un panneau en matière plastique transparente qui, dans sa position fermée, s'engage de tous côtés par son bord périphérique sous le bord (20) de la découpure de toit (6), **caractérisé en ce qu'**un revêtement de bord annulairement entourant (24) en matière plastique non transparente est apposé dans une région de bord périphérique (a) qui est prévue exclusivement sur le dessous du panneau (8), et **en ce que** le revêtement de bord (24) est fabriqué en une matière plastique ayant une plus grande résistance que la matière plastique transparente du panneau (8).

2. Toit à ventilation selon la revendication 1, **caractérisé en ce que** la matière plastique du revêtement de bord (24) est pourvue d'un renforcement incorporé dans cette matière.

3. Toit à ventilation selon la revendication 1 ou 2, **caractérisé en ce que** la matière plastique du panneau (8) est un polycarbonate transparent.

4. Toit à ventilation selon l'une des revendications 1 à 3, **caractérisé en ce que** la matière plastique du revêtement de bord (24) est un polycarbonate teinté.

5. Toit à ventilation selon l'une des revendications 1 à 4, **caractérisé en ce que** le bord périphérique du panneau (8) possède une forme contrecoudée vers le bas avec une branche sensiblement verticale (14) recourbée vers le bas à partir du plan du panneau, qui est suivie vers l'extérieur d'une branche (16) sensiblement horizontale, sachant que la région centrale (12) non contrecoudée du panneau (8) correspond par sa forme et sa taille à la découpure de toit (6) et que la branche horizontale (16) s'engage sous le bord (20) de la découpure de toit (6).

6. Toit à ventilation selon la revendication 5, **caractérisé en ce que** le revêtement de bord (24) recouvre au moins la région de bord périphérique contrecoudée (a) du panneau (8).

7. Toit à ventilation selon la revendication 5 ou 6, **caractérisé en ce que** le revêtement de bord (24) recouvre la région de bord périphérique contrecoudée (a) du panneau (8) et une bande marginale (b) respectivement limitrophe de cette région en direction du milieu du panneau.

8. Toit à ventilation selon la revendication 7, **caractérisé en ce que** la région de bord périphérique contrecoudée (a) et la bande marginale (b) qui en est limitrophe présentent respectivement une épaisseur réduite par rapport à la région centrale (12) du panneau (8), et **en ce que** le revêtement de bord (24) possède une épaisseur telle que l'épaisseur totale dans la région du revêtement de bord correspond sensiblement à l'épaisseur de la région centrale (12) du panneau (8).

9. Toit à ventilation selon l'une des revendications 5 à 8, **caractérisé en ce qu'**un joint d'étanchéité (22) annulairement entourant est prévu entre le bord (20) de la découpure de toit et la région de bord périphérique (a) du panneau (8).

10. Toit à ventilation selon la revendication 9, **caractérisé en ce que** le joint d'étanchéité annulairement entourant (22) est disposé entre la branche horizontale (16) de la région de bord périphérique contrecoudée (a) et le bord (20) de la découpure de toit.

11. Toit à ventilation selon la revendication 10, **caractérisé en ce que** le joint d'étanchéité (22) est fixé sur la branche horizontale (16) de la région de bord périphérique (a).

12. Toit à ventilation selon la revendication 11, **caractérisé en ce que** le joint d'étanchéité (22) est collé sur la branche horizontale (16) de la région de bord périphérique (a).

13. Toit à ventilation selon la revendication 11, **caractérisé en ce que** le revêtement de bord (824) dépasse de l'arête terminale (817) de la région de bord périphérique du panneau (808) vers l'extérieur et présente une branche (825) repliée vers le haut, et **en ce que** le joint d'étanchéité (822) est emboîté, par un pied d'emboîtement (823) formé sur lui, entre l'arête terminale (817) du bord périphérique et la branche (824).

14. Toit à ventilation selon l'une des revendications 5 à 12, **caractérisé en ce que** la branche horizontale (716) du panneau (708) est réalisée dans sa région extérieure en forme de gouttière (726).

15. Toit à ventilation selon l'une des revendications 5 à 13, **caractérisé en ce qu'**un espace prévu entre la branche verticale (514) de la région de bord périphérique contrecoudée du panneau (508) et le joint d'étanchéité (522) disposé sur la branche horizontale (516) est conçu comme gouttière (526).

16. Toit à ventilation selon l'une des revendications 9 à 14, **caractérisé en ce que** le bord (520) de la découpure de toit possède une branche (521) recourbée vers le bas, contre l'arête terminale de laquelle s'applique le joint d'étanchéité (522).

17. Procédé de fabrication d'un panneau (8) pour un toit à ventilation selon l'une des revendications 1 à 16, panneau qui est formé d'une matière plastique transparente et qui présente, dans une région de bord périphérique sur le dessous du panneau (8), un revêtement de bord (24) en matière plastique non transparente, **caractérisé en ce que** le panneau (8) est fabriqué avec le revêtement de bord (24) par un procédé d'injection 2-K en une seule opération et dans un même moule.

18. Procédé selon la revendication 17, **caractérisé en ce qu'**on mélange à la matière plastique non transparente du revêtement de bord (24) une matière de renforcement comme par exemple une matière à base de fibres de verre ou une matière à base de fibres de carbone.
